# EUROPÄISCHE PATENTSCHRIFT

(11) **EP 1 239 936 B1**
(45) Veröffentlichungstag und Bekanntmachung des Hinweises auf die Patenterteilung: **03.03.2004**
(21) Anmeldenummer: 00993384.7
(22) Anmeldetag: 12.12.2000
(51) Int. Cl.: B01D 29/00

(54) **ANORDNUNG ZUM FILTERN VON KUNSTSTOFFSCHMELZEN**
ARRANGEMENT FOR FILTERING PLASTIC MELTS
SYSTEME POUR LE FILTRAGE DE MATIERES FONDUES PLASTIQUES

(30) Priorität: 17.12.1999 DE 19961426
(43) Veröffentlichungstag der Anmeldung: 18.09.2002
(73) Patentinhaber: GNEUSS KUNSTSTOFFTECHNIK GmbH, D-32549 Bad Oeynhausen (DE)
(72) Erfinder: GNEUSS, Detlef, 32549 Bad Oeynhausen (DE)
(74) Vertreter: Valentin, Ekkehard, Dipl.-Ing.
(86) Internationale Anmeldenummer: PCT/EP2000/012598
(87) Internationale Veröffentlichungsnummer: WO 2001/043847

(56) Entgegenhaltungen:
- EP-A- 0 275 462
- DE-A- 3 836 530
- DE-U- 29 908 735
- US-A- 4 482 461

## Beschreibung

Die Erfindung betrifft eine Anordnung zum Filtern von Kunststoffschmelzen, bei der verschmutzte Filterelemente durch Rückspülen von aufgefangenen Schmutzpartikeln befreibar sind, wobei die zum Rückspülen benutzte Schmelze vom Schmelze-Hauptstrom ableitbar und durch Förderelemente zusätzlich beaufschlagbar ist, und wobei die Rückspülung periodisch, zeitabhängig und/oder in Abhängigkeit vom Verschmutzungsgrad des zu reinigenden Filterelementes auslösbar ist.

Derartige Filteranordnungen sind bekannt. Sie weisen in einem den Schmelze-Hauptstrom leitenden Kanal ein Filterelement auf, welches periodisch, zeitabhängig und/oder in Abhängigkeit vom Verschmutzungszustand aus dem Schmelze-Hauptstrom herausbewegt und durch ein neues bzw. gereinigtes Filter ersetzt wird. Das gebrauchte und in der Regel verschmutzte Filter wird in einen vom Schmelze-Hauptstromkanal abgezweigten Kanal gefördert, wo das Filterelement durch einen Rückspülvorgang gereinigt wird. In dem Bypaß-Kanal zum Reinigen des Filterelementes können zusätzlich Förderelemente für die Schmelze wie Förderpumpen bzw. Schußkolben angeordnet sein.

Der EP-A 0.275.462 ist eine Anordnung zum Filtern von Kunststoffschmelzen entnehmbar, bei der verschmutzte Filterelemente durch Rückspülen von aufgefangenen Schmutzpartikeln befreibar sind, wobei die zum Rückspülen benutzte Schmelze vom Schmelzehauptstrom abgeleitet wird und wobei die Auslösung der Rückspülung periodisch in Abhängigkeit vom Verschmutzungsgrad des zu reinigenden Filterelements erfolgt. Dazu wird eine Steuervorrichtung vorgeschlagen, die Auslassventile für die mit den Schmutzpartikeln versehene Schmelze über Steuerleitungen öffnet und schließt.

Die DE-U-299 08 735 offenbart eine Anordnung zum Filtern von Kunststoffschmelzen, bei der in der Zu- und Abflussleitung der Schmelze Drucksensoren vorgesehen sind. In der Schmelzerückführleitung ist eine Pumpe und ein Accelerator zur stoßweisen Druckerhöhung für die Rückspülung vorgesehen. Sobald die Druckdifferenz über ein Filterelement einen bestimmten Wert überschreitet, wird die Rückspülung, die einen gepulstes Gegenstromverfahren darstellt, eingeleitet.

Es hat sich herausgestellt, daß sowohl die vom Druck des Hauptstroms bewirkte Rückspülung als auch die Rückspülung mittels einer Pumpe bzw. eines Schußkolbens nicht immer eine wünschenswert optimale Reinigung des gebrauchten Filterelements bewirkt.

Der Erfindung liegt die Aufgabe zugrunde, eine gattungsgemäße Anordnung zum Filtern von Kunststoffschmelzen so weiterzubilden, daß in Abhängigkeit von dem Verschmutzungsgrad des jeweils zu reinigenden Filterelementes eine optimale Reinigung erfolgt.

Zur Lösung dieser Aufgabe wird eine Steuervorrichtung vorgeschlagen, die das Schmelzevolumen und/oder die Fließgeschwindigkeit der rückspülenden Schmelze eines Rückspülvorgangs bestimmt. Dadurch wird erreicht, daß vorzugsweise eine bestimmte Schmelzemenge mit einer bestimmten Fließgeschwindigkeit dem zu reinigenden Filterelement zugeführt wird. Dabei kann die Schmelzemenge und die Fließgeschwindigkeit in Abhängigkeit eines erwarteten Verschmutzungsgrades aufgrund von Erfahrungswerten von einem Operator eingestellt werden.

Es besteht aber auch die Möglichkeit, daß die Steuervorrichtung aufgrund ermittelter Prozeßparameter manuell auf die durch Rückspülvolumen und/oder Fließgeschwindigkeit bestimmte Reinigungseffizienz einstellbar ist. Die ermittelten Prozeßparameter geben dem Operator Hinweise auf den Verschmutzungsgrad des zu reinigenden Filters, so daß der Operator vorzugsweise das notwendige Schmelzevolumen sowie die Fließgeschwindigkeit der rückspülenden Schmelze manuell so einstellen kann, daß das zu reinigende Filter optimal von Schmutzpartikeln befreit wird.

Die Prozeßparameter lassen sich durch im Rückspülkreis und/oder im Schmelze-Hauptstromkanal angeordnete Sensoren ermitteln, deren Meßwerte bspw. auf einem Bildschirm anzeigbar sind. Bei diesen Sensoren kann es sich um Druckgeber handeln. Der Verschmutzungsgrad kann durch einen Vergleich des Drucksollwerts, wie er bei neuen Filterelementen aufgenommen werden kann, mit dem Druckistwert ermittelt werden.

Es besteht jedoch auch die Möglichkeit, den Verschmutzungsgrad des zu reinigenden Filterelements zu ermitteln, indem der Verschmutzungsgrad der sich nach erfolgter Rückspühlung in Fließrichtung hinter dem zu reinigenden Filterelement ergebenden Schmelze bestimmt wird und dieser, dem Verschmutzungsgrad des Filterelements annähernd äquivalente Verschmutzungsgrad auf einem Bildschirm angezeigt wird.

Wird anstelle der Steuervorrichtung eine Regelvorrichtung verwendet, so können die von den Sensoren ermittelten Prozeßparameter in den Regelkreis eingegeben werden, wo der entsprechende Soll-Istwert-Vergleich durchgeführt wird und daraufhin aufgrund abgespeicherter Verschmutzungsgrade und diesen zugeordneter Schmelzevolumina und/oder Fließgeschwindigkeiten die notwendigen Einstellungen geregelt vorgenommen werden. Auch eine jeweilige Berechnung der notwendigen Schmelzevolumina und/oder Fließgeschwindigkeiten aufgrund des ermittelten Verschmutzungsgrades anhand eines Rechenmodells läßt die entsprechende Regelvorrichtung zu.

Nachfolgend wird die Erfindung anhand der Beschreibung einer Zeichnung näher erläutert.

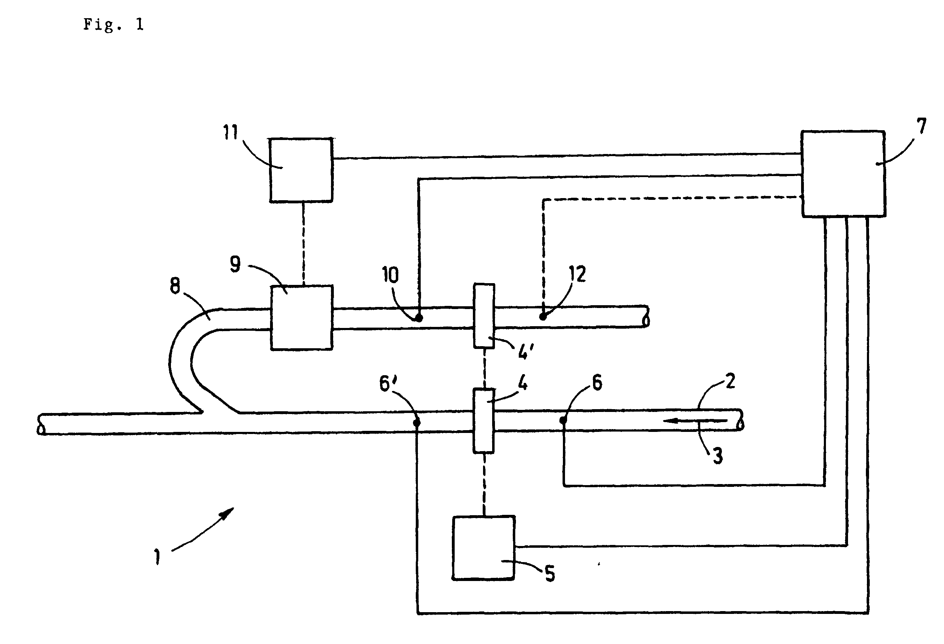

Die Figur zeigt eine Anordnung 1 zum Filtern von Kunststoffschmelzen. In einem Kanal 2 wird der Schmelze-Hauptstrom 3 geführt. Der Kanal 2 ist abgebrochen dargestellt. Er kann einerseits an einen nicht dargestellten Extruder und an der anderen Seite an eine Spritzgießmaschine angeschlossen werden. Im Kanal 2 ist ein Filterelement 4 vorgesehen, welches über eine Antriebsvorrichtung 5 aus dem Kanal 4 herausbewegbar ist.

Die Antriebsvorrichtung 5 kann das Filterelement periodisch oder aber zeitabhängig aus dem Kanal 2 herausbewegen. Die Figur zeigt jedoch, daß mittels der von Sensoren 6, 6' abgegebenen Messergebissen in einer Regelvorrichtung 7, z.B. über einen Druckvergleich, der Verschmutzungsgrad des Filters 4 ermittelt wird. Die Antriebsvorrichtung 5 wird bei einem bestimmten Verschmutzungsgrad zum Auswechseln des Filterelements 4 eingeschaltet, wobei gegebenenfalls die notwendige Geschwindigkeit zum Austausch des Filterelements 4 von der Regelvorrichtung 7 ermittelt und dem Antrieb 5 vorgegeben werden kann.

Vom Kanal 2 ist ein Rückspülkreis 8 abgezweigt. Im Rückspülkreis 8 ist ein Förderelement 9 angeordnet, welches vom Schmelze-Hauptstrom 3 gespeist wird und das zur Rückspülung benötigte Schmelzvolumen und/oder die Fließgeschwindigkeit der Rückspülschmelze zu bestimmen vermag. Im Rückspülkreis 8 ist weiterhin ein zu reinigendes Filterelement 4' vorgesehen. Ein Sensor 10 gibt Istwerte des Drucks im Rückspülkreis 8 an die Regelvorrichtung 7, von der ein Soll-Istwert-Vergleich durchgeführt und gegebenenfalls unter Einbeziehung der von den Sensoren 6, 6' ermittelten und abgespeicherten Verschmutzungswerte ein entsprechendes Steuersignal für die Antriebsvorrichtung 11 des Förderelements 9 abgeben wird. Dabei kann die Regelvorrichtung 7 anhand des ermittelten Verschmutzungsgrades einen im Speicher abgelegten äquivalenten Verschmutzungsgrad und die dazu gehörigen Schmelzevolumina und/oder Fließgeschwindigkeiten abrufen, und die jeweiligen abgerufenen Werte als Sollwerte auf die Antriebsvorrichtung 11 geben. Da zu bestimmten Verschmutzungsgraden des Filterelements 4' bei unterschiedlichen Viskositäten der Schmelze auch noch unterschiedliche Schmelzevolumina und/oder Fließgeschwindigkeiten der Rückspülschmelze notwendig werden, und ein Abspeichern einer Vielzahl von äquivalenten Verschmutzungsgrad- Werten eventuell zu aufwendig ist, kann der Reinigungsgrad des Filterelements 4' auch optional über einen Sensor 12 ermittelt werden. Das Meßsignal des Sensors 12 zur Ermittlung des Verschmutzungsgrades der sich nach erfolgter Rückspülung in Fließrichtung hinter dem zu reinigenden Filterelement ergebenden Schmelze kann dem Regelkreis 7 aufgeschaltet werden und zur Ermittlung optimaler Steuerwerte für die Antriebsvorrichtung 11 herangezogen werden.

Dadurch wird erreicht, daß in Abhängigkeit von der Verschmutzung des zu reinigenden Filterelements 4' das Schmelzevolumen und/oder die Fließgeschwindigkeit der rückspülenden Schmelze optimal einstellbar ist.

### Bezugszeichenliste

- 1: Filteranordnung
- 2: Kanal
- 3: Schmelze-Hauptstrom
- 4: Filterelement
- 5: Antriebsvorrichtung
- 6: Sensor
- 7: Regelvorrichtung
- 8: Rückspülkreis
- 9: Förderelement
- 10: Sensor
- 11: Antriebsvorrichtung
- 12: Sensor

## Patentansprüche

1. Anordnung (1) zum Filtern von Kunststoffschmelzen, bei der verschmutzte Filterelemente (4') durch Rückspülen von aufgefangenen Schmutzpartikeln befreibar sind, wobei die zum Rückspülen benutzte Schmelze vom Schmelze-Hauptstrom (3) ableitbar und durch Förderelemente (9) zusätzlich beaufschlagbar ist, und wobei die Rückspülung periodisch, zeitabhängig und/oder in Abhängigkeit vom Verschmutzungsgrad des zu reinigenden Filterelementes auslösbar ist,
**dadurch gekennzeichnet,**
**dass** das Schmelzevolumen und/oder die Fließgeschwindigkeit der rückspülenden Schmelze eines Rückspülvorgangs durch eine Steuervorrichtung (7) bestimmbar ist.

2. Anordnung nach Anspruch 1,
**dadurch gekennzeichnet,**
**daß** die Steuervorrichtung (7) aufgrund ermittelbarer Prozeßparameter manuell auf die durch Rückspülvolumen und/oder Fließgeschwindigkeit bestimmte Reinigungseffizienz einstellbar ist.

3. Anordnung nach Anspruch 2,
**dadurch gekennzeichnet,**
**daß** der Rückspülkreis (8) mit Sensoren (10) ausgestattet ist, mittels derer der Verschmutzungsgrad des Filterelements (4') erfassbar, und Prozeßparameter aufnehmbar sind.

4. Anordnung nach Anspruch 3,
**dadurch gekennzeichnet,**
**daß** die Sensoren (10) als im Rückspülkreis (8) angeordnete Druckgeber ausgebildet sind.

5. Anordnung nach einem der Ansprüche 2 bis 4,
**dadurch gekennzeichnet,**
**daß** der Rückspülkreis (8) mit Sensoren (12) ausgestattet ist, mittels derer der Verschmutzungsgrad der sich nach erfolgter Rückspühlung in Fließrichtung hinter dem zu reinigenden Filterelement (4') ergebenden Schmelze erfassbar, und Prozeßparameter aufnehmbar sind.

6. Anordnung nach Anspruch 5,
**dadurch gekennzeichnet,**
**daß** die Sensoren (12) als Emitter und Empfänger von elektromagnetischen bzw. akustischen Wellen ausgebildet sind.

7. Anordnung nach Anspruch 5,
**dadurch gekennzeichnet,**
**daß** die Sensoren (12) als optische Sensoren, insbesondere Laserscan-Sensoren ausgebildet sind.

8. Anordnung nach Anspruch 6,
**dadurch gekennzeichnet,**
**daß** die Sensoren (12) als akustische Sensoren, insbesondere UltraschallSensoren ausgebildet sind.

9. Anordnung nach einem der Ansprüche 1 bis 8,
**dadurch gekennzeichnet,**
**dass** die Steuervorrichtung als Regelvorrichtung (7) ausgebildet ist.

## Claims

1. An arrangement (1) for filtering a plastic melt by which soiled filter elements (4') are adapted to be freed from collected dirt particles by backwashing, the melt used for backwashing being adapted to be branched off the melt main flow path (3) and to be additionally charged with transport elements (9), said backwashing being adapted to be initiated periodically, time dependently and/or depending on the degree of soiling of the filter element to be cleaned,
**characterized in that**
the melt volume and/or the flow rate of the backwashing melt during a backwashing process is determinable by a control device (7).

2. The arrangement according to claim 1,
**characterized in that**
the control device (7) is manually adjustable to the cleaning efficiency determined by the volume of the backwashing melt and/or by the flow rate, as a function of determinable parameters.

3. The arrangement according to claim 2,
**characterized in that**
the backwash circuit (8) is equipped with sensors (10) by means of which the degree of soiling of the filter element (4') is registerable and process parameters recordable.

4. The arrangement according to claim 3,
**characterized in that**
the sensors (10) are configured to be pressure sensors disposed within the backwash circuit (8).

5. The arrangement according to one of the claims 2 through 4,
**characterized in that**
the backwash circuit (8) is equipped with sensors (12) by means of which the degree of soiling of the melt obtained upon completion of the backwashing process downstream from the filter element (4') to be cleaned is registerable and process parameters are recordable.

6. The arrangement according to claim 5,
**characterized in that**
the sensors (12) are configured to be emitters and receivers of electromagnetic or acoustic waves, respectively.

7. The arrangement according to claim 5,
**characterized in that**
the sensors (12) are configured to be optical sensors, more specifically laser scanning sensors.

8. The arrangement according to claim 6,
**characterized in that**
the sensors (12) are configured to be acoustic sensors, more specifically ultrasound sensors.

9. The arrangement according to one of the claims 1 through 8,
**characterized in that**
the control device is configured to be a regulating device (7).

## Revendications

1. Agencement (1) destiné à filtrer des matières plastiques fondues dans lequel des éléments filtrants (4') encrassés sont débarrassés des particules de saleté recueillies en procédant à un lavage à contre-courant, la matière fondue utilisée pour ce lavage à contre-courant étant adaptée pour être déviée du courant principal de matière fondue (3) et pour être en outre chargée d'éléments de transport (9), le lavage à contre-courant étant destiné à être mis en oeuvre périodiquement, en fonction du temps et/ou du degré d'encrassement de l'élément filtrant qu'il y a lieu de nettoyer,
**caractérisé en ce que**
le volume de matière fondue et/ou la vitesse d'écoulement de la matière fondue servant au lavage à contre-courant lors d'un procédé de lavage à contre-courant est destiné à être déterminé par un dispositif de commande (7).

2. Agencement selon la revendication 1,
**caractérisé en ce que**
le dispositif de commande (7) est destiné à être ajusté manuellement à l'efficacité de nettoyage déterminée par le volume du lavage à contre-courant et/ou par la vitesse d'écoulement en fonction de paramètres déterminables du procédé.

3. Agencement selon la revendication 2,
**caractérisé en ce que**
le circuit de lavage à contre-courant (8) est équipé de capteurs (10) permettant de détecter le degré d'encrassement de l'élément filtrant (4') et d'enregistrer les paramètres du procédé.

4. Agencement selon la revendication 3,
**caractérisé en ce que**
les capteurs (10) sont conformés sous forme de capteurs de pression disposés dans le circuit de lavage à contre-courant (8).

5. Agencement selon l'une quelconque des revendications 2 à 4,
**caractérisé en ce que**
le circuit de lavage à contre-courant (8) est équipé de capteurs (12) permettant de détecter le degré d'encrassement de la matière fondue obtenue en aval de l'élément filtrant (4') qu'il y a lieu de nettoyer une fois le lavage à contre-courant achevé, et d'enregistrer les paramètres du procédé.

6. Agencement selon la revendication 5,
**caractérisé en ce que**
les capteurs (12) sont conformés sous forme d'émetteurs et de récepteurs d'ondes électromagnétiques ou acoustiques respectivement.

7. Agencement selon la revendication 5,
**caractérisé en ce que**
les capteurs (12) sont conformés sous forme de capteurs optiques, notamment sous forme de capteurs à balayage laser.

8. Agencement selon la revendication 6,
**caractérisé en ce que**
les capteurs (12) sont conformés sous forme de capteurs acoustiques, notamment sous forme de capteurs ultrasons.

9. Agencement selon l'une quelconque des revendications 1 à 8,
**caractérisé en ce que**
le dispositif de commande est conformé sous forme de dispositif de réglage (7).
